# EUROPÄISCHE PATENTSCHRIFT

(11) **EP 1 072 572 B1**
(45) Veröffentlichungstag und Bekanntmachung des Hinweises auf die Patenterteilung: **26.03.2003**
(21) Anmeldenummer: 00115701.5
(22) Anmeldetag: 21.07.2000
(51) Int. Cl.: C04B 41/85

(54) **Verfahren zur Erzeugung einer Selbstreinigungseigenschaft von keramischen Oberflächen**
A method for obtaining self-cleaning ceramic surfaces
Procédé d'obtention de surfaces céramiques auto-nettoyantes

(30) Priorität: 28.07.1999 DE 19935062; 02.10.1999 DE 19947524
(43) Veröffentlichungstag der Anmeldung: 31.01.2001
(73) Patentinhaber: ERLUS BAUSTOFFWERKE, D-84088 Neufahrn (DE)
(72) Erfinder: Dendl, Peter, Dr., 93049 Regensburg (DE); Interwies, Jan, 84034 Landshut (DE); Lienert, Matthias, 84088 Neufahrn (DE)
(74) Vertreter: LOUIS, PÖHLAU, LOHRENTZ & SEGETH

(56) Entgegenhaltungen:
- EP-A- 0 124 000
- EP-A- 0 909 747
- DE-A- 2 227 760
- DE-C- 166 589
- DE-C- 202 624
- DE-C- 742 739
- US-A- 2 327 927
- DATABASE COMPENDEX [Online] ENGINEERING INFORMATION, INC., NEW YORK, NY, US; BURKHART T ET AL: "Nano sized Pd particles in a SiO2 matrix by sol-gel processing" Database accession no. EIX95042478010 XP002151336 & PROCEEDINGS OF THE 1994 MRS SPRING MEETING;SAN FRANCISCO, CA, USA APR 4-8 1994, Bd. 346, 1994, Seiten 779-784, Mater Res Soc Symp Proc;Materials Research Society Symposium Proceedings; Better Ceramics Through Chemistry VI 1994 Materials Research Society, Pittsburgh, PA, USA

## Beschreibung

Die Erfindung betrifft ein Verfahren zur Erzeugung einer Selbstreinigungseigenschaft von keramischen Oberflächen bei Beregnung oder Berieselung mit Wasser, mit den Merkmalen gemäß dem Oberbegriff des Patentanspruches 1. Weiterhin betrifft die Erfindung einen dadurch hergestellten keramischen Körper mit den Merkmalen des Oberbegriffs des Patentanspruchs 38.

Bei einem bekannten Verfahren dieser Art (EP-A 909 747) wird eine keramische Oberfläche mit einer Dispersion von Pulverpartikeln aus inertem Material in einer hydrophobierenden Siloxan-Lösung benetzt und das Siloxan ausgehärtet. Als Pulver kommt hierbei insbesondere ein Pulver aus gemahlener Keramik, z.B. Ton, in Betracht, dessen Korngrößenspektrum leicht festlegbar ist. Die angestrebte Verteilungsdichte (der jeweilige Abstand zwischen den durch die Partikel erzeugten Erhebungen auf der Oberfläche) kann durch die Dispersionsdichte des Pulvers in der Siloxan-Lösung gesteuert werden, wobei mit zunehmender Dispersionsdichte auch die Verteilungsdichte der Erhebungen auf der Oberfläche gesteigert wird. Als Siloxan-Lösung werden Polysiloxane herangezogen, die üblicherweise zum Hydrophobieren (Imprägnieren) von Dachziegeln und dergleichen bekannt sind. Die Aushärtung dieser Siloxane erfolgt durch Trocknen.

Die Pulverpartikel werden bei diesem bekannten Verfahren durch die Polysiloxane auf der Oberfläche mechanisch befestigt und zugleich hydrophobiert. Es hat sich jedoch gezeigt, daß die Haftfestigkeit der Siloxananbindung im Laufe der Benutzungsdauer abnimmt und die Partikel sich von der Oberfläche bei mechanischer Beanspruchung lösen. Damit geht die Selbstreinigungseigenschaft der Oberflächen mehr und mehr verloren.

Aus der DE 2 227 760 A1 sind Bodenfliesen bekannt, deren Oberfläche zur Verbesserung der Trittsicherheit mit rauhigkeitsbewirkenden Spitzen versehen ist. Dies wird dadurch erreicht, daß in den Glasuransatz Korundpulver gegeben wird. Was die Reinigbarkeit der glasierten Fliesen betrifft, ist in dem Dokument angegeben, daß die den glasierten Körpern eigene leichte Reinigbarkeit trotz der Oberflächenrauhigkeit erhalten bleibt.

Aufgabe der Erfindung ist es, das Verfahren der vorstehend genannten Art zur Erzeugung einer Selbstreinigungseigenschaft von der Witterung ausgesetzter keramischer Oberflächen bei Dachziegeln, Klinkern und Fassadenwänden sowie bei keramischen Oberflächen an Innenflächen von Rauchrohren dahingehend zu verbessern, daß die auf der Oberfläche zu fixierenden Pulverpartikel auf einfache Weise dauerhaft mit der Oberfläche verbunden werden. Ferner ist es eine Aufgabe der Erfindung, einen keramischen Körper zu schaffen, der als Dachziegel, Klinker, Fassadenwand oder Rauchrohr ausgebildet ist und eine bei Beregnung oder Berieselung mit Wasser dauerhaft selbstreinigend ausgebildete Oberfläche aufweist. Diese Aufgabe wird mit dem Verfahren gemäß Patentanspruch 1 sowie mit dem keramischen Körper gemäß Patentanspruch 38 gelöst.

Die Erfindung beruht auf der Erkenntnis, daß es möglich ist, die die Erhebungen bildenden Pulverpartikel bei geeigneter Materialwahl des Pulvers und ggf. unter Anwendung von Unterstützungsmaßnahmen quasi-keramisch und damit dauerhaft an der keramischen Oberfläche zu befestigen, wenn hierzu ein Erhitzungsvorgang oder sogar der ohnehin notwendige Brennvorgang zur Erzielung des entsprechenden Keramikkörpers herangezogen wird. Damit bilden die von den Pulverpartikeln erzeugten Erhebungen mit der keramischen Oberfläche eine Einheit und haben bezüglich chemischer und UV-Beständigkeit, mechanischer Festigkeit und Handhabbarkeit des keramischen Körpers damit übereinstimmende Eigenschaften. Zugleich wird die bekannte Möglichkeit beibehalten, durch Ausbildung der Erhebungen mittels Pulverpartikeln die Verteilungsdichte und die Höhe der Erhebungen sehr weitgehend zu bestimmen und darüber hinaus wird die Möglichkeit eröffnet durch Auswahl von Pulvermaterialien, die sich der Art nach auch von der keramischen Oberfläche unterscheiden können, zusätzliche Effekte, z. B. Farbeffekte, und Eigenschaften der Oberfläche zu erzeugen. So eignen sich als Pulvermaterialien alle hitzebeständigen gemahlenen Materialien wie z. B. gemahlenes Gestein, Minerale, und alle denkbaren Keramikmaterialien wie Tone und Schamotte sowie alle Vertreter der Oxid-, Nitrid- und Carbid-Keramik, z. B. Al₂O₃ und SiC.

Je nach der Art des ausgewählten Pulvermaterials und abhängig davon, ob das Pulvermaterial auf die bereits gebrannte keramische Oberfläche oder noch vor deren Brand aufgebracht wird, bestimmt sich die Art der Erzielung der quasi-keramischen dauerhaften Befestigung der Pulverpartikel auf der Oberfläche. Hierfür bestehen unterschiedliche Möglichkeiten und Vorgehensweisen:

Grundsätzlich ist es möglich, ohne irgendwelche unterstützenden Maßnahmen Pulverpartikel aus Keramikmaterial auf der Keramikoberfläche durch einen Erhitzungsvorgang oder den Brandvorgang selbst zu fixieren indem das Erweichungsverhalten der Pulverpartikel aufgrund der dabei auftretenden Erhitzung ausgenützt wird. Hierzu ist es erforderlich, die in gewünschter Verteilung aufgebrachten Pulverpartikel vorübergehend auf der Oberfläche festzuhalten, beispielsweise durch die eingangs geschilderte bekannte Polysiloxan-Behandlung oder durch CMC, und den Erhitzungs- oder Brennvorgang anschließend mit einer Temperatur auszuführen, die zu einem oberflächlichen Erweichen der Pulverpartikel führt. Das ergibt eine sinterähnliche Verbindung der Pulverpartikel mit der ebenfalls auf Erweichungstemperatur erhitzten keramischen Oberfläche. Voraussetzung ist hierfür aber, daß das Material der Pulverpartikel an das Material der keramischen Oberfläche hinsichtlich des Sinter- bzw. Erweichungsverhaltens weitgehend angepaßt ist, um bei der beabsichtigten Erhitzungs- oder Brenntemperatur sowohl an der keramischen Oberfläche als auch an der Oberfläche der Pulverpartikel die zur Verbindung notwendige Erweichung hervorzurufen. Deshalb kommen dafür im wesentlichen keramische Pulvermaterialien in Betracht, die durch Mahlen von Keramikkörpern erzeugt sind, welche der Art nach mit der keramischen Oberfläche übereinstimmen (bei keramischen Dachziegeln z. B. gemahlener Ton oder Schamotte). Nur hierbei ist zu erwarten, daß bei der Brenntemperatur der keramischen Oberfläche deren zur Sinterung erforderliche Erweichung zugleich mit der erneuten Erweichung der Pulverpartikel eintritt. Das entsprechende Vorgehen eignet sich deshalb vor allem für den Fall, daß das Pulvermaterial auf die noch nicht gebrannte keramische Oberfläche aufgebracht wird.

Weiterhin ist es jedoch auch möglich, Pulvermaterialien auszuwählen, die bei Erreichen der Erhitzungs- oder Brenntemperatur eine eutektische Reaktion mit der keramischen Oberfläche entstehen lassen. Hierzu zählen beispielsweise Pulver aus Schamotte, durch deren eutektische Reaktion mit der keramischen Oberfläche die Sinter- bzw. Erweichungstemperatur deutlich herabgesetzt wird. Diese Reaktion erlaubt daher die dauerhafte Bindung solcher Pulverpartikel vor allem durch einen erneuten Erhitzungsvorgang der bereits gebrannten keramischen Oberfläche, aber auch durch den Brand der noch zu brennenden keramischen Oberfläche selbst.

Nach einer diesbezüglich modifizierten Vorgehensweise werden Pulverpartikel eingesetzt, deren Sinter- bzw. Erweichungspunkt erheblich höher liegt als die Brenntemperatur der zugrundeliegenden keramischen Oberfläche. Hierbei kann es sich z.B. um feingemahlene Klinkerpartikel oder um SiC-Pulver handeln. Diese Pulverpartikel werden vorzugsweise in Form einer Aufschlämmung in Wasser oder Carboxyl-Methyl-Cellulose (CMC) in einer bis zu mehrere Millimeter dicken Schicht auf die zu brennende keramische Oberfläche aufgetragen und dadurch vorübergehend darauf fixiert. Grundsätzlich ist auch eine Auftragung der Schicht der Pulverpartikel in trockenem Zustand möglich, jedoch ist dabei die Handhabung der die keramische Oberfläche bildenden Keramikkörper zum Zweck des Brandes praktisch unmöglich ohne einen teilweisen oder völligen Verlust der Pulverpartikel. Es hat sich gezeigt, daß beim Brand die sich an der keramischen Oberfläche bildende Glasphase (SiO₂) etwas in die der keramischen Oberfläche am nächsten liegende Lage von Pulverpartikeln, d.h. zwischen die Pulverpartikel, "hineinwächst" und diese dadurch fixiert. Die überschüssigen Pulverpartikel können auf der Oberfläche belassen werden, weil sie nach dem Brand vor oder bei der Ingebrauchnahme von selbst herunterfallen. Zweckmäßigerweise werden sie aber durch Bürsten oder Reiben oder andere geeignete Abtragungsmaßnahmen anschließend an den Brand von der keramischen Oberfläche wieder entfernt, wobei nicht nur diejenigen Lagen der Pulverpartikel-Schicht entfernt werden, welche von der Glasphase der keramischen Oberfläche während des Brandes nicht erfaßt worden sind, sondern auch solche Pulverpartikel, die zu wenig festgehalten werden. Es hat sich herausgestellt, daß bei diesem Vorgehen und bei Verwendung von Pulvermaterialien, die eine zur Fixierung ausreichende Affinität zur Glasphase besitzen, eine Verteilung und Erhebung der Pulverpartikel auf der bzw. über die gebrannte keramische Oberfläche ergeben. Hierdurch ist eine bleibende Fixierung der Pulverpartikel auf der keramischen Oberfläche zu erreichen, ohne daß bezüglich der Brenntemperatur im Hinblick auf die Materialien der keramischen Oberfläche bzw. der Pulverpartikel Kompromisse getroffen werden müssen.

Nach einer bevorzugten Weiterbildung der Erfindung werden abweichend von den vorstehend beschriebenen Verfahren unterstützende Maßnahmen getroffen, durch welche die dauerhafte quasi-keramische Bindung der hitzebeständigen Pulverpartikel an die keramische Oberfläche weitgehend unabhängig von deren Materialart ist und bei Temperaturen erzielt werden kann, welche ohne besondere Anpassung die jeweils optimale Brenntemperatur nicht übersteigen. Als unterstützende Maßnahmen in diesem Sinn sieht die Erfindung in erster Linie die Verwendung von einem die Bindung der Pulverpartikel an die keramische Oberfläche fördernden oder erst bewirkenden Material vor, das durch den Erhitzungsoder Brennvorgang der keramischen Oberfläche als Bindeglied wirksam wird. Hierfür eignen sich Stoffe, die bei der Erhitzungs- oder Brenntemperatur zumindest einen Erweichungszustand erreichen, bevorzugt aber in den schmelzflüssigen Zustand übergehen und hierbei eine quasi-keramische Bindung mit der keramischen Oberfläche eingehen. Bevorzugt sind auf dem Gebiet der Keramik bekannte Materialien wie Engoben (auf dem Gebiet der Grobkeramik), Glasuren, Glasurstellmittel und auch Flußmittel, z. B. Borax. Flußmittel haben neben ihrer Funktion als Bindeglied auch die Fähigkeit, die Ausbildung einer Glas- oder Schmelzphase an der keramischen Oberfläche bei dem Brand zu fördern und damit die quasi-keramische Bindung zu unterstützen. Soweit diese Materialien auf dem Gebiet der Keramik bekanntermaßen zur Erzielung bestimmter Effekte eingesetzt werden, z.B. auf dem Gebiet der Baukeramik Engobe zur Farbgebung von Dachziegeln, so muß bei deren Verwendung im Rahmen des erfindungsgemäßen Verfahrens ein entsprechend angepaßtes Temperaturprofil bei dem Brennvorgang eingestellt oder beachtet werden. Das heißt, es muß ins Kalkül gezogen werden, daß dem jeweiligen Material jetzt die zusätzliche Aufgabe der Befestigung der Pulverpartikel zukommt und insoweit eine Abstimmung der zu erzielenden Effekte erfordern kann. So muß in dem Beispiel der Engobe deren Auftragsmenge darauf eingestellt sein, daß durch Auswahl von Menge und Anpassung des Temperaturprofils beim Brand dafür gesorgt ist, daß die Pulverpartikel genügend weit aus der Engobeschicht herausragen, um die gewünschten Erhebungen zu bilden. Diese Abstimmung läßt sich aber durch wenige Erprobungen erzielen.

Als die quasi-keramische Bindung fördernde oder bewirkende Mittel kommen aber auch anorganisch-organische Hybridpolymere und Fluorsilane in Betracht, deren Funktion als Bindeglied auf andere Weise zustande kommt. Hierbei treten bei der Wärmebehandlung, die sowohl der Erhitzungsals auch der Brennvorgang sein kann, molekulare Bindungen auf, die zwischen dem Hybridpolymer bzw. Fluorsilan einerseits und den Pulverpartikeln sowie der keramischen Oberfläche andererseits wirksam werden. Nähere Ausführungen hierzu ergeben sich aus der nachfolgenden Erläuterung.

Der Einsatz des die quasi-keramische Bindung fördernden oder bewirkenden Materials läßt sich auf mannigfaltige Weise bewerkstelligen und besteht grundsätzlich darin, daß dieses Material mit den Pulverpartikeln, der keramischen Oberfläche oder beiden in Verbindung gebracht wird, wobei wiederum der jeweilige Zeitpunkt vor dem Aufbringen der Pulverpartikel auf die Oberfläche, gleichzeitig damit oder nachträglich liegen kann. Bevorzugt wird das die quasi-keramische Bindung fördernde oder bewirkende Material auch als Substanz ausgewählt, das neben der Funktion als Bindeglied für die zu erzielende dauerhafte Befestigung der Pulverpartikel an der keramischen Oberfläche zugleich die Funktion als Haftmittel zu dem Zweck hat, bis zur Durchführung des Erhitzungs- oder Brennvorgangs die Pulverpartikel vorläufig auf der keramischen (gebrannten oder noch zu brennenden) Oberfläche zu fixieren. Nachfolgend werden bevorzugte Vorgehensweisen für die Art des Einsatzes des die quasi-keramische Bindung fördernden oder bewirkenden Materials erläutert:

Nach einer vorteilhaften Ausgestaltung des erfindungsgemäBen Verfahrens ist hierzu vorgesehen, daß die Pulverpartikel vor oder bei dem Aufbringen auf die Oberfläche mit dem die Bindung an die Oberfläche fördernden Material behandelt werden. Als Materialien kommen hierfür beispielsweise die bereits erwähnten in Betracht, deren Verarbeitung in Verbindung mit insbesondere grobkeramischen Oberflächen, z. B. Dachziegeln, bekannt ist, wie Engobe oder Glasur. Engoben sind Spezialtone zum Färben beispielsweise von Dachziegeln durch Aufbrennen; Glasuren sind Glasarten, die Oxide als Flußmittel enthalten und auf keramischen Oberflächen als glänzende Schichten beim Brennen erzeugt werden können. Beide Mittel liegen im Zustand vor ihrer Auftragung auf die jeweils zu behandelnde keramische Oberfläche in flüssiger Form vor, in der sie auch zur Behandlung oder Beschichtung der Pulverpartikel geeignet sind. Eine Behandlung der Pulverpartikel kann zugleich zu deren Beschichtung mit dem Behandlungsmaterial als auch zu einem Eindringen des Behandlungsmaterials in die gegebenenfalls vorhandene Kapillarstruktur führen, aber auch gegebenenfalls nur das genannte Eindringen ergeben. Bei einer Beschichtung ist auf der Außenfläche der Pulverpartikel das Behandlungsmaterial als mehr oder weniger geschlossene Schicht vorhanden. Die Beschichtung oder Behandlung der Pulverpartikel kann ihrerseits entweder dadurch erfolgen, daß die Pulverpartikel in der Engobe oder der Glasur dispergiert werden und die Dispersion dann auf die zu behandelnde Oberfläche aufgesprüht, aufgeschüttet oder aufgeschleudert wird. Oder die Pulverpartikel und das Behandlungsmaterial, z. B. die Engobe bzw. Glasur, werden getrennt zu einer Sprühvorrichtung gefördert und zusammen aufgesprüht, wobei der Sprühvorgang zugleich der Behandlungs- oder Beschichtungsvorgang ist. Werden durch die beschriebene Vorgehensweise die Pulverpartikel so mit dem die Bindung fördernden Material behandelt, daß es an der Außenseite der Pulverpartikel in Erscheinung tritt, z. B. als Beschichtung, so kann diese als Maßnahme zur vorläufigen Befestigung der Pulverpartikel auf der keramischen Oberfläche nach dem Aufbringen darauf genügen.

Als ein die Bindung der Pulverpartikel an die Oberfläche förderndes Material hat sich weiterhin auch ein phosphathaltiges Flußmittel erwiesen, das üblicherweise als Glasurstellmittel bei der Herstellung der aufzubringenden Glasurflüssigkeit verwendet wird. Auch allein dieses Flußmittel gewährleistet überraschend eine quasi-keramische Bindung der Pulverpartikel an die keramische Oberfläche durch den Erhitzungsvorgang oder nach dem Brand.

In allen vorstehend geschilderten Fällen ist der Anteil an Behandlungsmaterial jeweils so gering, daß beim Sprühvorgang eine Beschichtung der keramischen Oberfläche selbst weitgehend unterbleibt, falls diese nicht erwünscht ist. Als Mittel zur vorläufigen Befestigung der Pulverpartikel genügt das Behandlungsmaterial in diesem Fall nicht.

Der Verbindungsmechanismus, der sich aufgrund der Verwendung in der vorstehend geschilderten Form von Engobe, Glasur und Glasurstellmittel einstellt, beruht darauf, daß die Schicht aus dem entsprechenden Material auf den Pulverpartikeln bei einer durch die Materialwahl steuerbaren Temperatur in einen hinreichend erweichten oder schmelzflüssigen Zustand gelangt und sich mit den aufgrund einer eutektischen Reaktion oder bei Brenntemperatur der keramischen Oberfläche ebenfalls erweichten Teilchen davon vereinigt. Es hat sich gezeigt, daß die beispielsweise auf Schmelztemperatur gebrachte Schicht während des Brennvorgangs bei der entsprechenden Lage des zu brennenden Keramikkörpers auf die Oberfläche geringfügig herablaufen kann und damit einen "Sinterhals" im unmittelbaren Kontaktbereich jedes Partikels mit der Oberfläche bildet. Nach dem Erkalten ergibt sich daraus die quasi-keramische Bindung an die keramische Oberfläche, die in ihrer Festigkeit den Bindungen der Keramikpartikel der Oberfläche untereinander gleichkommt.

Als weiteres, die Bindung der Pulverpartikel an die keramische Oberfläche förderndes oder bewirkendes Material kann auch ein anorganisch-organisches Hybridpolymer herangezogen werden. Als anorganisch-organische Hybridpolymere kommen Verbindungen in Betracht, die ein molekulares oder nano-strukturiertes Basismaterial mit anorganischen und organischen Elementen aufweisen (vgl. Bericht über "First European Workshop on Hybrid Organic-Inorganic Materials - Centre National de la Recherche Scientifique, Chäteau de Bierville, 8.-10. November 1993). Solche Hybridpolymere sind bekannt unter dem Markennamen ORMOCER des Fraunhofer-Instituts für Silicat ISC, Würzburg und durch die Firma nanogate GmbH, Saarbrücken. Hergestellt werden die Hybridpolymere überwiegend durch Hydrolyse und Kondensation von Kieselsäureestern und Metallalkoholaten als Grundmaterialien. Spezielle Eigenschaften erhalten diese Systeme durch den Einbau von organisch modifizierten Kieselsäurederivaten in das Silicat-Netzwerk. Dadurch können gezielt erwünschte Eigenschaften eingestellt werden und außerdem bewirken die organischen Anteile den Aufbau eines organischen Polymer-Netzwerks.

Die quasi-keramische Bindung der Pulverpartikel an die Oberfläche erfolgt bei Verwendung eines der anorganisch-organischen Hybridpolymere allerdings auf andere Weise als dies vorstehend im Zusammenhang mit den Mitteln wie Engobe, Glasur und/oder Glasurstellmittel dargestellt ist. Die dauerhafte Befestigung der Partikel an der keramischen Oberfläche erfolgt in dem Erhitzungs- oder Brennvorgang des Keramikkörpers offenbar dadurch, daß die anorganischen Komponenten der anorganisch-organischen Hybridpolymere, vorzugsweise Silikate und/oder Metalloxide (z.B. Al₂O₃,ZrO₂,TiO₂) im Zuge der Verfestigung und/oder Sinterung durch den Brand bzw. bei der Erhitzung Bindungen sowohl an die Pulverpartikel als auch an den Keramikkörper eingehen. Dadurch entsteht die quasi-keramische Verbindung der Pulverpartikel mit der keramischen Oberfläche, die die Pulverpartikel zu einer Einheit mit der Oberfläche werden läßt.

Die Hybridpolymere können in Wasser oder Lösemittel dispergiert oder gelöst werden, so daß das Auftragen auf die zu behandelnde keramische Oberfläche mit den üblichen Beschichtungstechniken wie Tauchen, Schleudern, Polieren, Gießen oder Spritzen möglich ist. Damit dient auch das Hybridpolymer als Haftmittel zur vorläufigen Fixierung der Pulverpartikel. Das Auftragen auf die Pulverpartikel selbst kann in der zuvor geschilderten Weise erfolgen. An das Auftragverfahren schließt sich ein Härtungsprozeß an, der durch thermische Behandlung oder mit Hilfe von UV- oder Wärmestrahlung durchführbar ist. Er ist nur dann erforderlich, wenn die Pulverpartikel durch das Hybridpolymer auf der bereits gebrannten keramischen Oberfläche befestigt werden; anderenfalls tritt der Brand an dessen Stelle. Je nach Bestimmungsart der Hybridpolymere kann die thermische Behandlung zwischen Raumtemperatur und 600° C durchgeführt werden; sie ist nicht zu verwechseln mit dem Erhitzungs- oder Brennvorgang, dem der die keramische Oberfläche aufweisende Keramikkörper bei einer höheren Temperatur von z. B. 900° C bis zu 1.450° C unterzogen wird.

Für Fluorsilane gilt das zu Hybridpolymeren Gesagte weitgehend analog. Als Fluorsilane kommen fluoralkylfunktionelle Silane in Betracht, die mit Wasser unter Hydrolyse und Abspaltung von Ethanol zu einem reaktiven Silanol reagieren, wobei das Silanol chemisch an ein anorganisches Substrat gebunden werden kann. Durch chemische Reaktion mit der zu behandelnden Oberfläche wird eine Si-O-Bindung an die Oberfläche ausgebildet. Daran schließt sich eine Quervernetzung unter Ausbildung eines Siloxan-Netzwerks an. Die Fluorsilane ergeben außerordentlich dünne Schichten im Nanometerbereich, die in den Porenöffnungen des Kapillargefüges der keramischen Oberfläche und auf den freien Flächen des Kapillargefüges nahe der Oberfläche im Inneren des Keramikkörpers und gegebenenfalls der Pulverpartikel aufgebaut werden. In diesen schichten können Gruppen der Fluorsilane quasi-keramisch wirksam werden und die angestrebte Bindung eingehen. Fluorsilane der beschriebenen Art sind im Handel unter dem Markennamen DYNASYLAN F 8261 (in Abwandlungen davon unter F 8810, F 8262 und F 8263) der Firma Sivento Chemie GmbH, Düsseldorf, erhältlich.

Die Fluorsilane können mit Wasser und Lösemitteln, z. B. Ethanol, gemischt werden, so daß das Auftragen auf die Pulverpartikel und/oder die keramische Oberfläche mit den üblichen Beschichtungstechniken wie Tauchen, Sprühen, Streichen oder Polieren möglich und auf eine der beschriebenen Techniken durchführbar ist. An das Auftragverfahren schließt sich ein Trocknungs- oder Vernetzungsprozeß an, der durch thermische Behandlung oder mit Hilfe von UV- oder Wärmestrahlung durchführbar ist. Die thermische Behandlung kann zwischen 80 und 600°C durchgeführt werden.

Da die Bindung der Pulverpartikel an die Oberfläche durch das die Bindung fördernde oder bewirkende Material bewirkt werden soll, kommt es nur darauf an, daß beim Erhitzungsoder Brennvorgang des Keramikkörpers das Material in unmittelbarer Nachbarschaft der Pulverpartikel zur Verfügung steht, um die erwünschte Bindung an die keramische Oberfläche herzustellen. Hierfür kann, wie vorstehend beschrieben, die Behandlung der Pulverpartikel allein genügen. Das hat den Vorteil, daß eine eventuell für die Funktion und/oder Farbgebung der keramischen Oberfläche nicht erwünschte oder beabsichtigte Auswirkung des die Bindung fördernden oder bewirkenden Materials auch auf die unmittelbare Nachbarschaft der Pulverpartikel beschränkt bleibt. Wird jedoch die beschriebene Behandlung des Pulvermaterials selbst als zu umständlich oder aufwendig angesehen und/oder ist ein negativer Einfluß des die Bindung fördernden Materials auf die keramische Oberfläche nicht zu befürchten, so kann dieses Material auch unmittelbar auf die keramische Oberfläche aufgetragen werden.

So ist es möglich, das Aufbringen der Pulverpartikel und das Auftragen einer entsprechenden Materialschicht auf die Oberfläche gleichzeitig oder nacheinander auszuführen. Beispielsweise kann das Pulver in gleicher Weise wie bei dem eingangs besprochenen bekannten Verfahren unter Verwendung von Polysiloxan als Haftmittel auf die zu behandelnde Oberfläche aufgebracht werden. Nach dem Aushärten bzw. Trocknen der Polysiloxan-Schicht, durch welche die Pulverpartikel an die Oberfläche in der gewünschten Verteilungsdichte vorläufig gebunden sind, kann die Materialschicht aufgebracht werden. Beim Erhitzen oder Brennen des Keramikkörpers werden die organischen Bestandteile der Schichten beseitigt. Die Reihenfolge des Aufbringens der beiden Schichten kann auch umgekehrt werden, so daß das die Bindung fördernde Material die untere Schicht bildet.

Sofern als Material zur Förderung der Bindung der Pulverpartikel an die Oberfläche ein solches eingesetzt wird, das die angestrebten Oberflächeneigenschaften der keramischen Oberfläche, z. B. deren Farbe, nicht verändert und außerdem als Haftmittel zur vorläufigen Fixierung der Pulverpartikel geeignet ist, kann weiterhin anstelle der Behandlung oder Beschichtung der Pulverpartikel selbst auch daran gedacht werden, die zu behandelnde Oberfläche zunächst mit einem solchen Material zu beschichten und anschließend die Pulverpartikel in die so erzeugte Schicht so einzubringen, daß sie zur Ausbildung der gewünschten Erhebungen noch hinreichend weit darüber hinausragen. Das Einbringen der Pulverpartikel, die dann unbehandelt sein können, kann durch Streuen, Sprühen oder Schleudern erfolgen. Beim Erhitzungs- oder Brennvorgang des Keramikkörpers läuft dann prinzipiell der gleiche zuvor beschriebene Verbindungsvorgang ab mit dem Unterschied, daß aufgrund der die Keramikoberfläche von vornherein bedeckenden Materialschicht eine überschießende Menge davon zur nicht nur örtlichen Fixierung der Pulverpartikel zur Verfügung steht. Als ein mit dieser Verbindungsart brauchbares Material kommt wieder eine Engobe oder Glasur in Betracht, insbesondere dann, wenn diese ohnehin zu einer bestimmten Farbgebung der keramischen Oberfläche dient.

Da auf dem Gebiet der Bautechnik von dafür eingesetzten Keramikkörpern, z. B. Tondachziegeln, häufig Atmungsfähigkeit aufgrund ihres Kapillargefüges gefordert wird, kann anstelle der beschriebenen Beschichtung der Pulverpartikel selbst die Beschichtung der Oberfläche mittels Glasur oder mit Hilfe des genannten Flußmittels nur in Erwägung gezogen werden, wenn Atmungsfähigkeit des Keramikkörpers nicht benötigt oder erwünscht ist. Das gilt bei solchen Keramikkörpern, z. B. Dachziegeln, dann, wenn mittels einer Glasur eine besondere Farbgebung beabsichtigt ist. Auch dann kann an die Stelle der Beschichtung der Pulverpartikel die Beschichtung der Oberfläche mit dem die Bindung an die Keramikoberfläche fördernden Material treten. Auch hierbei erfüllt das die dauerhafte Bindung bewirkende Material zugleich die Funktion der vorläufigen Fixierung der Pulverpartikel. Dabei können die Pulverpartikel auch als Dispersion durch Tauchen, z. B. in Engobe oder Glasur, gemeinsam mit dem Material aufgebracht werden.

Die Vorgehensweise, bei der das Haftmittel zur vorübergehenden Fixierung der Pulverpartikel an der keramischen Oberfläche zusammen mit den Pulverpartikeln bzw. vor oder nach deren Aufbringen aufgetragen wird und außerdem ein die quasi-keramische Bindung der Pulverpartikel daran förderndes oder bewirkendes Material ist, eignet sich auch dazu, die Relativlage der Erhebungen zueinander (Verteilungsdichte) und deren Höhe an der fertig gebrannten keramischen Oberfläche zu steuern. Hierzu wird so vorgegangen, daß aus dem fließfähigen Haftmittel, z. B. einer entsprechend eingestellten Engobe oder Glasur, und den Pulverpartikeln eine Dispersion hergestellt und diese Dispersion auf die keramische Oberfläche aufgetragen wird. Durch die Konzentration der Pulverpartikel in der Dispersion und durch die Schichtdicke, mit der diese auf die Oberfläche aufgetragen wird, läßt sich die Menge der je Flächeneinheit vorhandenen Pulverpartikel auf der Oberfläche und damit die Verteilungsdichte steuern. Weiterhin bestimmt die Konzentration des die Bindung fördernden oder bewirkenden Materials, in dem gewählten Beispiel wieder die Engobe bzw. Glasur, in der Dispersion die Tiefe der Einbettung der Pulverpartikel in dieses Material und damit die Höhe der Erhebungen an der letztlich erzielten keramischen Oberfläche.

Die Konzentration, d.h. die anteilige Gewichtsmenge an Pulverpartikeln in der Dispersion, ist etwas von der gewählten Partikelgröße und natürlich von der angestrebten Verteilungsdichte abhängig. Im allgemeinen genügen jedoch 20 Gew.-% Pulverpartikel in der Dispersion als obere Grenze, um die gewünschte Erhebungsstruktur zu erhalten. In einem praktischen Ausführungsbeispiel ergibt eine Dispersion bestehend aus 20 Teilen Engobe, 20 Teilen CMC + Wasser und 10 Teilen Schamottepulver mit einer Partikelgröße zwischen 1 und 25 µm, zur Hälfte davon mit 10 bis 15 µm, eine Erhebungsstruktur mit Erhebungen von 5 bis 10 µm Höhe.

Die Konzentration der Pulverpartikel in der Dispersion und/oder die Schichtdicke davon kann auch so gewählt werden, daß die erzielte keramische Oberfläche Erhebungen durch unmittelbar aneinanderliegende Pulverpartikel zeigt. In diesem Fall kommen die Erhebungen nur noch dadurch zustande, daß als Pulverpartikel Teilchen eingesetzt werden, die trotz unmittelbarer Anlage aneinander die erwünschte Oberflächenstruktur ergeben. Dazu zählen z.B. sphärische Partikel oder Partikel mit unregelmäßiger Teilchenform, die insbesondere bei gemahlenem Material der Regelfall ist. Gezielt können auch Partikel mit beispielsweise plättchen- oder stäbchenförmiger Gestalt eingesetzt werden.

Ist das Haftmittel zur vorläufigen Fixierung der Pulverpartikel auf der keramischen Oberfläche kein die Bindung daran förderndes Material, was z. B. für Polysiloxan oder CMC gilt, so läßt sich durch eine damit hergestellte Dispersion der Pulverpartikel zwar ebenfalls die Verteilungsdichte durch Einstellung der Konzentration der Pulverpartikel steuern. Jedoch wird die Höhe der Erhebungen in diesem Fall im wesentlichen durch die Partikelgröße sowie durch einen gegebenenfalls in der Dispersion ebenfalls vorzusehenden Anteil an die quasi-keramische Bindung förderndem Material definiert.

In all den Fällen, in denen das Haftmittel unmittelbar auf die keramische Oberfläche vor, zusammen mit oder nach den Pulverpartikeln aufgebracht wird, können die Pulverpartikel unbehandelt sein, wenn ein die quasi-keramische Bindung förderndes Material anderweitig zur Verfügung gestellt wird, oder auch damit behandelt sein, selbst wenn das Haftmittel seinerseits das die quasi-keramische Bindung fördernde Material enthält oder bildet.

Eine andere unterstützende Maßnahme zur quasi-keramischen Bindung der Pulverpartikel an die keramische Oberfläche, bei der kein die Bindung an die Oberfläche förderndes Material benutzt wird, besteht darin, daß die Pulverpartikel durch einen mechanischen Preßvorgang in die vor dem Brennen noch bildsame keramische Oberfläche eingedrückt werden, sodaß sie daraus in dem gewünschten Maß hervorstehen. Zunächst bedeutet dieser Vorgang die vorläufige Fixierung der Pulverpartikel auf der Oberfläche, ist zugleich aber die Grundlage für deren dauerhafte Bindung daran, wie weiter unten erläutert ist. Der Preßvorgang kann entweder anschließend an den Formvorgang des Kerämikkörpers in einer gesonderten Preßform vorgenommen werden, aber auch schon unmittelbar bei dem Formvorgang des Keramikkörpers, der in einer Preßform abläuft. In beiden Fällen ist es zweckmäßig, das Pulvermaterial in einer Schichtdicke auf der bereits geformten Oberfläche bzw. auf der noch zu formenden Oberfläche des in die Preßform einzubringenden Rohlings aufzutragen, die ein Mehrfaches der Teilchengröße der Pulverpartikel beträgt. Das Pulver kann hierbei in der Schicht in trockener Form vorliegen oder mit einem Bindemittel zur vorübergehenden Fixierung leicht gebunden sein. Mit der genannten Schichtdicke wird der Umstand ausgenützt, daß die der keramischen Oberfläche am nächsten liegenden Pulverpartikel überwiegend oder vollständig in die weiche bis lederharte Oberfläche eingedrückt werden, jedoch ein entsprechend tiefes Eindringen der nächstfolgenden Pulverpartikel verhindern. Die noch weiter von der Oberfläche entfernt darüberliegenden Pulverpartikel dienen in diesem Fall allein zur Übertragung der Preßkraft auf die zu fixierenden Pulverpartikel. Sie fallen von selbst nach dem Brand ab, können aber auch schon nach dem Preßvorgang oder Brand durch Absaugen, Bürsten oder Spülen von der Oberfläche entfernt und wiedergewonnen werden. Die Pulverpartikel, die nach dem Brennen des Keramikkörpers eine Struktur von Erhebungen bilden sollen, sind diejenigen, deren vollständiges Eindringen in die noch bildsame Keramikoberfläche durch die zuvor eingedrungenen Pulverpartikel verhindert worden ist. Das entsprechende Ausmaß des Eindringens läßt sich empirisch durch die Wahl der Partikelgröße, die Preßkraft und das Fließverhalten der keramischen Masse bestimmen bestimmen, wobei in diesem Fall sogar über 1000 µm große Pulverpartikel angewendet werden können.

Bei dieser Vorgangsweise sind die später die Erhebungen bildenden Pulverpartikel nicht durch ein gesondertes Haftmittel, wie Engobe oder Glasur, fixiert, sondern dadurch, daß sie in Folge ihres teilweisen Eindringens in die Oberfläche von dieser form- und kraftschlüssig festgehalten sind. Im Zuge der bei Brenntemperatur auftretenden Erweichung der keramischen Oberfläche während des Brandes wandert das Keramikmaterial, insbesondere eine entstehende Glasphase, an die Pulverpartikel heran und füllt vorhandene Zwischenräume zu diesen aus. Auf diese Weise stellt sich auch hier eine quasi-keramische Bindung der Pulverpartikel an die Oberfläche ein, wobei das Keramikmaterial der Oberfläche -hierbei selbst die Bindung herstellt.

Zwangsläufig sind als Werkstoffe für das Pulver nur solche geeignet, die den Brenntemperaturen relativ unbeeinträchtigt standhalten. Vorzugsweise kommen hierfür Pulver aus gemahlener Keramik in Betracht. Solche Pulver lassen sich einfach in jeweils gewünschter Korngröße und genau spezifizierten Fraktionen erzeugen, verhalten sich ebenso wie die damit zu belegende keramische Oberfläche inert gegenüber den Beschichtungsmaterialien und können nach ihrer Art eng an die keramische Oberfläche angepaßt werden. Sie bestimmen die Farbe der behandelten Oberfläche, die daher in einem breiten Farbbereich gewählt werden kann. Es sind aber auch nicht-keramische Pulver einsetzbar, die sich in der vorstehend geschilderten Weise mit einer keramischen Oberfläche verbinden lassen. Pulver aus gefärbtem Glas, z. B. Grünglaspulver, kann unmittelbar zur Farbgebung der keramischen Oberfläche herangezogen werden und bedarf auch keiner gesonderten Beschichtung mit einem die Bindung an die keramische Oberfläche fördernden Material.

Es hat sich gezeigt, daß zur Erzielung der Selbstreinigungseigenschaft der keramischen Oberfläche Höhen der Erhebungen von 1 µm bis 1000 µm grundsätzlich brauchbar sind. Die Verteilungsdichte, d. h. der relative Abstand der Erhebungen voneinander, sollte 0 bis 500 µm betragen. Für die Höhen der Erhebungen ist ein Bereich von 5 µm bis 600 µm bevorzugt, weil in diesem Bereich die Fähigkeit zur Selbstreinigung weitgehend unabhängig von der Verteilungsdichte der Erhebungen in den angegebenen Grenzen ist. Insbesondere in dem darüber liegenden Bereich der Höhen ist eine gewisse Relation zwischen der Erhebungshöhe und dem gegenseitigen Abstand der Erhebungen zu beachten, um den Selbstreinigungseffekt zu erhalten. So dürfen in diesem Fall die Erhebungen nicht nahe an der unteren Grenze der Verteilungsdichte liegen, weil sonst auf der keramischen Oberfläche abrollende Wassertropfen nicht in Kontakt mit der Oberfläche gelangen können, die zwischen den Erhebungen liegt. Dieser Kontakt ist jedoch erforderlich, damit die Wassertropfen zwischen den Erhebungen befindliche Schmutzansammlungen erfassen, aufnehmen und abtransportieren können.

Wie bei dem eingangs besprochenen bekannten Verfahren ist ein weiteres Kriterium für die Steuerung der Verteilungsdichte die Wahl des Kornspektrums des Pulvers. Wird Pulver größerer Teilchengröße eingesetzt oder umfaßt das Teilchengrößenspektrum des eingesetzten Pulvers verhältnismäßig kleine Partikel, z. B. von 1 µm, und zugleich verhältnismäßig große Partikel von z. B. 1000 µm, so werden durch die Fraktion größerer Partikel größere Abstände auf der zu behandelnden Oberfläche geschaffen. Im Bereich größerer Partikel ist folglich deren Verteilungsdichte geringer, jedoch werden in ihrer Umgebung oder auch unmittelbar auf den größeren Partikeln kleinere Partikel angelagert. Diese Art der Verteilung läßt sich auch durch ein zweistufiges Verfahren zur dauerhaften Befestigung der Pulverpartikel erreichen. Hierbei wird in einer ersten Verfahrensstufe auf eine der beschriebenen Weisen eine Pulverfraktion größerer Partikelgröße fixiert. In einer zweiten Verfahrensstufe, vorzugsweise unter Verwendung eines Hybridpolymers oder Fluorsilans im Rahmen einer später erfolgenden Hydrophobierung, wird eine feinere Pulverfraktion dauerhaft befestigt, deren Partikel zwischen und gegebenenfalls an großen Partikeln angelagert werden. Durch eine relativ eng eingegrenzte Pulverfraktion kann eine weitgehend homogene Belegung der zu behandelnden Oberfläche erreicht werden.

Es hat sich gezeigt, daß die Selbstreinigungseigenschaft der die Erhebungen aufweisenden keramischen Oberfläche ausgeprägter vorhanden ist bei einer Teilchengröße in der oberen Hälfte des angegebenen Bereichs von 1 bis 1000 µm. Andererseits ist erkennbar, daß bei einem kleineren Korngrößenbereich, z. B. von 10 bis 30 µm, zusätzlich zu der angestrebten hydrophoben Eigenschaft der Oberfläche eine lipophobe Eigenschaft erzielbar ist. Dies ist deshalb überraschend, weil man im allgemeinen davon ausgeht, daß eine hydrophobe Eigenschaft eine lipophobe Eigenschaft ausschließt und das Synonym für eine lipophile Eigenschaft ist. Die lipophobe Eigenschaft ist von Vorteil, weil dadurch die auch bezüglich fettiger Verunreinigungen vorhandene Selbstreinigungseigenschaft gefördert wird. Da solche Verunreinigungen durch Ruße oder hochgesättigte Fette/Öle gerade in Industriegegenden ausgeprägt sind, empfiehlt es sich für keramische Oberflächen, die in diesen Gegenden zum Einsatz kommen, Erhebungen im unteren oder mittleren Korngrößenbereich zu wählen.

Nach einer Weiterbildung der Erfindung kann auch daran gedacht werden, die keramische Oberfläche und/oder das aufzubringende Pulver mit einem bewuchshemmenden Mittel zu beschichten oder zu imprägnieren. Solche sogenannten Antifoulingmittel, die beispielsweise Zink, Zinn, Bromide, Phosphate, Fluoride usw. als Wirkstoffe enthalten, sind bekannt. Das Antifoulingmittel kann je nach dem Ort, an welchem es letztlich primär zur Wirkung kommen soll, auf unterschiedliche Weise auf- oder eingebracht werden. So kann das Antifoulingmittel in der durch die Erhebungen gebildeten Struktur vorhanden sein, d. h. sowohl auf der zwischen den Erhebungen frei liegenden keramischen Oberfläche als auch in den Erhebungen selbst. Weiterhin kann dafür gesorgt werden, allein die Erhebungen, d. h. die Pulverpartikel, mit dem Antifoulingmittel auszurüsten oder allein auf der keramischen Oberfläche, also in den Zwischenräumen zwischen den Erhebungen, das Antifoulingmittel vorzusehen. Schließlich können alle diese Wahlmöglichkeiten gleichzeitig realisiert sein, d. h. das Antifoulingmittel ist durchgehend auf der keramischen Oberfläche und auf bzw. in den Erhebungen vorhanden.

Eine Behandlung sieht vor, Pulverpartikel vor dem Aufbringen auf die keramische Oberfläche in einem bewuchshemmenden Mittel dieser Art zu tränken und anschließend gegebenenfalls zu trocknen oder das Antifoulingmittel auf das aufgebrachte Pulver aufzubringen. Falls das bewuchshemmende Mittel nur pulverförmig vorliegt, erfolgt die Behandlung der Pulverpartikel durch Vermengen und Verrühren, wobei die Teilchengröße des bewuchshemmenden Mittels auf gegebenenfalls vorhandene Poren der Pulverpartikel so abgestimmt sein sollte, daß es hinreichend eindringen und davon festgehalten werden kann. Hierfür kommen vor allem keramische Pulverpartikel in Betracht, da deren Kapillargefüge zur Aufnahme des Antifoulingmittels besonders geeignet ist. Um sicherzustellen, daß das Antifoulingmittel über lange Zeit hinweg in den Pulverpartikeln vorhanden ist, wird es zweckmäßig mit einem der vorstehend angesprochenen Beschichtungsmaterialien kombiniert, die ihrerseits eine mechanische Schutzschicht bilden. Damit kommt zwar das Antifoulingmittel während der Wirksamkeit einer solchen Schutzschicht nicht zur Wirkung, braucht das aber auch nicht, weil mit einem Bewuchs aufgrund der selbstreinigenden Eigenschaft der behandelten keramischen Oberfläche nicht zu rechnen ist. Sollte doch im Laufe der Zeit die mechanische Schutzschicht verringert oder abgetragen werden, dann nimmt im entsprechenden Ausmaß die bewuchshemmende Wirkung des Antifoulingmittels zu.

Nach einer Abwandlung des Einsatzes von Antifoulingmitteln ist daran gedacht, den bewuchshemmenden Effekt ausschließlich durch den "Einbau" entsprechender Gruppen oder Radikale in das organische Gerüst von anorganisch-organischen Hybridpolymeren zu erzeugen. Sofern solche Hybridpolymere, wie vorstehend geschildert, als die Bindung der Pulverpartikel an die Oberfläche förderndes Material herangezogen werden und damit beispielsweise die Pulverpartikel beschichtet werden, kann ein hierzu verwendetes Hybridpolymer selbst bewuchshemmend ausgerüstet sein.

Falls das Antifoulingmittel pulverförmig in entsprechender Größe vorliegt und der hier bestehenden Forderung nach Hitzebeständigkeit entspricht, kann auch daran gedacht sein, das Antifoulingmittel unmittelbar als Pulverpartikel zur Erzeugung der Erhebungen auf der keramischen Oberfläche heranzuziehen. Auch in diesem Fall muß, ähnlich wie bei den Hybridpolymeren, eine Schmelz- oder Sintereigenschaft des Antifoulingmittels zur quasi-keramischen Bindung an die keramische Oberfläche ausgenützt werden oder es muß wie vorstehend beschrieben mit einem die Bindung an die keramische Oberfläche fördernden oder bewirkenden Material behandelt werden.

Für den Fall, daß das Antifoulingmittel ausgeprägt auch auf der keramischen Oberfläche selbst, also zwischen den Erhebungen, zur Wirkung kommt, kann es entweder anstelle der vorstehend geschilderten Behandlung der Pulverpartikel damit oder zusätzlich durch entsprechendes Beschichten oder Imprägnieren vor dem Aufbringen der Pulverpartikel eingebracht werden. Bei einer der vorstehend beschriebenen Vorgehensweisen zum Aufbringen der Pulverpartikel, bei der Pulverpartikel in einer Schicht eines Haftmittels und/oder eines die Bindung fördernden Materials enthalten sind, läßt sich das erreichen, indem das Antifoulingmittel unmittelbar in dem Haftmittel bzw. die Bindung fördernden Mittel enthalten ist und damit zwangsläufig an der keramischen Oberfläche angelagert wird.

Die angestrebte Selbstreinigungsfähigkeit setzt einen hydrophoben Zustand zumindest der auf der Oberfläche erzeugten Strukturerhebungen voraus, den zweckmäßig auch die Oberfläche selbst zwischen den Erhebungen hat. Deshalb muß im Rahmen der vorliegenden Erfindung anschließend an den Brennvorgang die keramische Oberfläche mit den darauf befestigten Pulverpartikeln hydrophobiert werden, was in bekannter Weise und mit bekannten Mitteln, z. B. durch Anwendung von Polysiloxanen, geschehen kann. Dieser Vorgang zur Hydrophobierung kann je nach den Erfordernissen mehrfach und gegebenenfalls auch mit unterschiedlichen Hydrophobierungsmitteln durchgeführt werden. Je nach Art der Ausführung des Hydrophobierungsvorgangs kann das entsprechende Mittel an allen Oberflächen des Keramikkörpers vorgesehen sein, d. h. auch an denjenigen Oberflächen, die nicht die durch Pulverpartikel erzeugte Struktur aufweisen, oder es wird gezielt dafür gesorgt, daß eine Hydrophobierung nur der die Struktur aufweisenden keramischen Oberfläche bewirkt wird. Unterschiedliche Mittel zur Hydrophobierung können in der Form eingesetzt werden, daß in einer ersten Behandlungsstufe ein weniger UV-beständiges und daher billigeres Mittel verwendet wird, durch welches das oberflächennahe Kapillargefüge der Oberfläche bis zu einer gewünschten Tiefe imprägniert wird. In einer zweiten Behandlungsstufe wird dann mit einem UVbeständigen und daher teureren Mittel gearbeitet, das somit weitgehend auf die Oberfläche beschränkt ist und den hydrophoben Zustand daher über lange Zeit hinweg aufrecht erhält.

Die Hydrophobierung ist nach der dauerhaften Befestigung der Pulverpartikel auch erforderlich, wenn in einer der vorstehend geschilderten Vorgehensweisen die Pulverpartikel auf der bereits gebrannten Oberfläche durch einen Erhitzungsvorgang befestigt worden sind, dem das Hydrophobierungsmittel nicht standhalten könnte. Jedoch können zur Hydrophobierung auch die vorstehend erwähnten anorganisch-organischen Hybridpolymere oder Fluorsilane herangezogen werden. Wenn in einem solchen Fall ein Hybridpolymer oder Fluorsilan zur Befestigung der Pulverpartikel auf der Oberfläche im Brennvorgang in der geschilderten Weise eingesetzt wird, werden seine Eigenschaften nach zwei unterschiedlichen Aspekten ausgenützt: Einerseits werden im Silikat-Netzwerk enthaltene Komponenten zur Erzeugung der quasi-keramischen Verbindung der Pulverpartikel mit der keramischen Oberfläche herangezogen, wobei aufgrund der Brandtemperatur das organische Netzwerk des Hybridpolymers bzw. Fluorsilans naturgemäß zerstört wird. Andererseits wird durch seine erneute Verwendung zum Hydrophobieren der Oberfläche die entsprechende Eigenschaft des organischen Netzwerks darin wirksam. Da diese Hybridpolymere oder Fluorsilane in Lösung oder Dispersion mit allen gängigen Beschichtungsverfahren aufgetragen werden können und ihre Härtung thermisch oder photochemisch, gegebenenfalls bei erhöhten Temperaturen, durchzuführen ist, gleicht das Hydrophobierverfahren weitgehend im Ablauf dem Hydrophobierverfahren unter Anwendung herkömmlicher Polysiloxane. Werden aber die Hybridpolymere bzw. Fluorsilane zur dauerhaften Befestigung der Pulverpartikel auf der bereits gebrannten keramischen Oberfläche eingesetzt, so behalten sie ihre hydrophobe Eigenschaft bei und eine nachträgliche gesonderte Hydrophobierung kann entfallen.

Die Hydrophobierung mit den anorganisch-organischen Hybridpolymeren ergibt einen wesentlichen Vorteil auch im Hinblick auf die große mechanische Widerstands- und Haftfestigkeit, mit der die Hybridpolymere neben ihrer hydrophobierenden Eigenschaft ausgestattet sein können. So ist es bekannt, mit so gestalteten Hybridpolymeren glatte Oberflächen zu behandeln, so daß diese außerordentlich kratzfest sind. Im vorliegenden Fall führt die Anwendung solcher Hybridpolymere dazu, daß nach dem Hydrophobieren der die Erhebungen aufweisenden keramischen Oberfläche die an sich aufgrund ihrer exponierten Lage mechanisch stärker beanspruchten Erhebungen nachhaltig sowohl hydrophobiert bleiben als auch ein gegebenenfalls eingesetztes Antifoulingmittel darin gehalten wird. Auch können die auf diese Weise hydrophobierten und erfindungsgemäß mit Erhebungen ausgestatteten Keramikkörper ohne Gefahr einer Beeinträchtigung der angestrebten Eigenschaften, insbesondere ohne Abriebgefahr wie üblich transportiert werden und im Fall beispielsweise von Dachziegeln damit eingedeckte Dächer begangen werden.

Das erfindungsgemäße Verfahren zur Erzeugung eines Selbstreinigungseffekts von keramischen Oberflächen ist gedacht und anwendbar auf jedem Gebiet der Keramik, wo ein Selbstreinigungseffekt denkbar und sinnvoll erscheint. In erster Linie gilt das für solche Keramikkörper, die üblicherweise der Witterung ausgesetzt sind und der Selbstreinigungseffekt durch natürliche Beregnung eintreten kann und daher keiner besonderen Reinigungsaktivität bedarf. Jedoch gilt das auch in Fällen, in denen Keramikkörper einer Verschmutzung (z. B. durch Staub, Öldunst oder Ablagerungen durch umgebende Strömung) ausgesetzt sind ohne sich im Freien zu befinden und daher nicht beregnet werden können. In diesem Fall liegt der Vorteil der Selbstreinigungsfähigkeit darin, daß die Verschmutzung einfach durch Berieseln oder Abwaschen mit einer Reinigungsflüssigkeit, vorzugsweise mit Wasser, beseitigt werden kann.

Auf dem Gebiet der Baustoff- und Grobkeramik, z.B. für Dachziegel, Klinker- und Fassadenwände, mit Keramikmaterial belegten Freitreppen und dgl., findet die Selbstreinigung allein durch immer wieder auftretenden Regen statt. Deshalb ist es zweckmäßig, diejenigen Flächen zu strukturieren, die sowohl der Verschmutzung als auch dem Regen ausgesetzt sein werden. Bei Dachziegeln oder Klinkern gilt das in erster Linie für deren Sichtseiten, erweist sich aber auch für die Unter- oder Hinterseiten davon als sinnvoll, wenn mit deren Verschmutzung während der Lagerung auf offenen Lagerflächen zu rechnen ist.

Entsprechendes gilt auch für Feinkeramik, z.B. für Fliesen, Waschbecken und sonstige Artikel der Sanitätskeramik bei denen eine Berieselung in Bädern und Naßzellen sowohl bei Benutzung wie bei gezieltem Abwaschen erfolgt. Weiterhin erweist sich die Ausnutzung des Selbstreinigungseffekts aber auch bei Keramikkörpern der Elektrokeramik als von Vorteil, z.B. bei elektrischen Isolatoren von Schaltern oder Leitungen, die im Freien dem Schmutz- und Staubniederschlag ausgesetzt sind. Nässe plus Schmutzschichten erhöhen hier die Neigung zu Überschlag und können leicht entfernt werden, wenn solche Keramikkörper an ihrer Oberfläche durch Anwendung des erfindungsgemäßen Verfahrens entsprechend strukturiert sind. Auch an den Innenflächen von Keramik-Rauchrohren kann es von Vorteil sein, durch Ausbildung einer den Selbstreinigungseffekt bewirkenden Struktur dafür zu sorgen, daß durch herablaufendes Wasser (z.B. durch Einregnen) oder auch durch herablaufendes Kondensat die Innenfläche von Ruß und festen Anlagerungen oder Verschmutzungen freigehalten wird. Weiterhin empfiehlt sich die erfindungsgemäß geschaffene Selbstreinigungsfähigkeit auch für Keramikkörper der Gebrauchskeramik, z. B. Blumentöpfe, Blumenvasen, Gechirr und dergleichen, die dadurch gegebenenfalls auch ohne Verwendung von Reinigungsmitteln allein durch Wasser leicht gesäubert werden können. Schließlich kann die Schaffung eines Selbstreinigungseffekts auch bei Keramikkörpern auf dem Gebiet der technischen Keramik sinnvoll sein, z. B. bei solchen Keramikkörpern, auf denen durch Kontakt mit ständiger oder vorübergehender Strömung Anlagerungen entstehen können. Dies ist beispielsweise bei Keramikdichtungen oder Keramikventilkörpern der Fall, bei denen es wesentlich ist, die jeweilige Dichtfläche von Anlagerungen freizuhalten.

## Patentansprüche

1. Verfahren zur Erzeugung einer Selbstreinigungseigenschaft von der Witterung ausgesetzten keramischen Oberflächen von Dachziegeln, Klinkem und Fassadenwänden sowie von keramischen Oberflächen an Innenflächen von Keramikrauchrohren, bei Beregnung oder Berieselung mit Wasser,
bei dem auf einer keramischen Oberfläche als Erhebungen Pulverpartikel aus hitzebeständigem Material mit einer vorbestimmten Verteilungsdichte befestigt werden,
**dadurch gekennzeichnet,**
**daß** die Pulverpartikel auf die keramische Oberfläche aufgebracht und darauf zunächst vorläufig befestigt werden;
**daß** anschließend die Oberfläche auf eine Temperatur erhitzt wird, bei der die Pulverpartikel eine Bindung mit der keramischen Oberfläche eingehen und dadurch dauerhaft darauf befestigt werden;
**daß** die keramische Oberfläche nach der dauerhaften Befestigung der Pulverpartikel hydrophobiert wird.

2. Verfahren nach Anspruch 1,
**dadurch gekennzeichnet,**
**daß** die Pulverpartikel auf die gebrannte keramische Oberfläche aufgebracht werden.

3. Verfahren nach Anspruch 1 oder 2,
**dadurch gekennzeichnet,**
**daß** die Pulverpartikel vor dem Brennen der keramischen Oberfläche auf diese aufgebracht werden.

4. Verfahren nach Anspruch 3,
**dadurch gekennzeichnet,**
**daß** der die Oberfläche bildende Keramikkörper bei einer Temperatur gebrannt wird, bei der die Pulverpartikel die dauerhafte Bindung mit der keramischen Oberfläche eingehen.

5. Verfahren nach Anspruch 3,
**dadurch gekennzeichnet,**
**daß** die Pulverpartikel auf die noch bildsame keramische Oberfläche aufgebracht und durch Eindrücken in die Oberfläche vorläufig darauf befestigt werden.

6. Verfahren nach Anspruch 5,
**dadurch gekennzeichnet,**
**daß** die Pulverpartikel in einer Schicht mit einer Schichtdicke von einem Mehrfachen der Partikelgröße auf die noch bildsame keramische Oberfläche aufgebracht werden.

7. Verfahren nach Anspruch 6,
**dadurch gekennzeichnet,**
**daß** die Pulverpartikel trocken oder leicht aneinander gebunden in der Schicht vorliegen.

8. Verfahren nach einem der Ansprüche 5 bis 7,
**dadurch gekennzeichnet,**
**daß** die Pulverpartikel auf die bereits fertig geformte Oberfläche des Keramikkörpers aufgebracht werden.

9. Verfahren nach einem der Ansprüche 5 bis 7,
**dadurch gekennzeichnet,**
**daß** die Pulverpartikel auf die Oberfläche eines Rohlings zur Preßformung eines Keramikkörpers aufgetragen werden und der Preßformvorgang zum Eindrücken der Pulverpartikel dient.

10. Verfahren nach einem der Ansprüche 5 bis 9,
**dadurch gekennzeichnet,**
**daß** überschüssige Pulverpartikel von der noch bildsamen oder von der gebrannten keramischen Oberfläche durch Bürsten, Reiben, Spülen, Blasen und/oder Wischen entfernt werden.

11. Verfahren nach einem der Ansprüche 1 bis 4,
**dadurch gekennzeichnet,**
**daß** die Pulverpartikel auf der gebrannten bzw. noch zu brennenden keramischen Oberfläche durch ein Haftmittel vorläufig befestigt werden.

12. Verfahren nach Anspruch 11,
**dadurch gekennzeichnet,**
**daß** das Haftmittel ein die dauerhafte Bindung der Pulverpartikel an die keramische Oberfläche förderndes oder bewirkendes Material ist.

13. Verfahren nach Anspruch 11,
**dadurch gekennzeichnet,**
**daß** das Haftmittel ein bei der Erhitzung zur Erzielung der dauerhaften Bindung der Pulverpartikel an die Oberfläche zerfallendes Material ist.

14. Verfahren nach Anspruch 12,
**dadurch gekennzeichnet,**
**daß** als die dauerhafte Bindung fördemdes oder bewirkendes Material eine Engobe, eine Glasur, ein Glasurstellmittel oder ein Flußmittel, z.B. Borax, verwendet wird.

15. Verfahren nach Anspruch 12,
**dadurch gekennzeichnet,**
**daß** als die dauerhafte Bindung fördemdes oder bewirkendes Material ein anorganisch-organisches Hybridpolymer oder ein Fluorsilan verwendet wird.

16. Verfahren nach Anspruch 1
**dadurch gekennzeichnet,**
**daß** die Pulverpartikel auf der gebrannten oder noch zu brennenden keramischen Oberfläche durch ein Haftmittel vorläufig befestigt werden, wobei das Haftmittel ein die dauerhafte Bindung der Pulverpartiket an die keramische Oberfläche förderndes und bewirkendes Material ist, welches als ein anorganisch-organisches Hybridpolymer oder ein Fluorsilan ausgebildet ist.

17. Verfahren nach einem der Ansprüche 13 bis 16,
**dadurch gekennzeichnet,**
**daß** als bei der Erhitzung zerfallender Haftmittel Carboxyl-Methyl-Cellulose (CMC) oder ein Polysiloxan verwendet wird.

18. Verfahren nach einem der Ansprüche 11 bis 17,
**dadurch gekennzeichnet,**
**daß** die Pulverpartikel vor oder bei dem Aufbringen auf die Oberfläche mit dem Haftmittel zur vorläufigen Befestigung behandelt oder beschichtet werden.

19. Verfahren nach einem der Ansprüche 11 bis 18,
**dadurch gekennzeichnet,**
**daß** die Oberfläche mit dem Haftmittel behandelt oder beschichtet wird und daß anschließend die Pulverpartikel derart aufgebracht werden, daß sie, aus der Schicht herausragend, in das Schichtmaterial eingebettet sind.

20. Verfahren nach einem der Ansprüche 11 bis 17,
**dadurch gekennzeichnet,**
**daß** die Pulverpartikel in dem Haftmittel dispergiert werden und daß die Dispersion auf die Oberfläche aufgebracht wird.

21. Verfahren nach Anspruch 20,
**dadurch gekennzeichnet,**
**daß** die Dispersion auf die Oberfläche aufgesprüht, aufgeschüttet, aufgeschleudert oder elektrostatisch aufgetragen wird.

22. Verfahren nach einem der Ansprüche 11 bis 17,
**dadurch gekennzeichnet,**
**daß** die Pulverpartikel und das Haftmittel getrennt zu einer Sprühvorrichtung gefördert werden und die Pulverpartikel zusammen mit dem Haftmittel auf die Oberfläche aufgesprüht werden.

23. Verfahren nach den Ansprüchen 12 und 18,
**dadurch gekennzeichnet,**
**daß** die Schichtdicke des die Bindung fördernden oder bewirkenden Materials auf den Pulverpartikeln so gering gehalten wird, daß nach der die dauerhafte Bindung bewirkenden Erhitzung das Material an der keramischen Oberfläche auf den Kontaktbereich der einzelnen Pulverpartikel mit der Oberfläche beschränkt bleibt.

24. Verfahren nach einem der Ansprüche 4 bis 23,
**dadurch gekennzeichnet,**
**daß** Pulverpartikel aus einem Material, dessen Sinter- bzw. Erweichungstemperatur mit der Brenntemperatur der zu brennenden keramischen Oberfläche übereinstimmt, auf die Oberfläche aufgebracht werden.

25. Verfahren nach einem der Ansprüche 4 bis 23,
**dadurch gekennzeichnet,**
**daß** die keramische Oberfläche aus einem Keramikmaterial besteht, das bei dem Brand das Entstehen einer oberflächlichen Glasphase ergibt,
und **daß** Pulverpartikel aus einem Material, dessen Sinter- bzw. Erweichungstemperatur erheblich über der Brenntemperatur der zu brennenden keramischen Oberfläche liegt, auf die Oberfläche aufgebracht werden.

26. Verfahren nach einem der Ansprüche 1 bis 25,
**dadurch gekennzeichnet,**
**daß** temperaturbeständiges gemahlenes Material wie gemahlenes Gestein, Schamotte, Ton, Minerale und Keramikpulver wie SiC als Pulverpartikel verwendet wird.

27. Verfahren nach einem der Ansprüche 1 bis 25,
**dadurch gekennzeichnet,**
**daß** gemahlenes Glas oder Glasschamotte als Pulverpartikel verwendet wird.

28. Verfahren nach einem der Ansprüche 1 bis 27,
**dadurch gekennzeichnet,**
**daß** die Pulverpartikel die Farbgebung der keramischen Oberfläche bestimmen.

29. Verfahren nach einem der Ansprüche 15 bis 28,
**dadurch gekennzeichnet,**
**daß** die anorganisch-organischen Hybridpolymere organisch modifizierte Kieselsäurederivate enthalten.

30. Verfahren nach einem der Ansprüche 15 bis 29,
**dadurch gekennzeichnet,**
**daß** die Hybridpolymere Metalloxide enthalten.

31. Verfahren nach einem der Ansprüche 12 bis 30,
**dadurch gekennzeichnet,**
**daß** dem die dauerhafte Bindung fördernden oder bewirkenden Material ein bewuchshemmendes Mittel zugefügt wird.

32. Verfahren nach Anspruch 31,
**dadurch gekennzeichnet,**
**daß** das bewuchshemmende Mittel mit dem die dauerhafte Bindung fördernden oder bewirkenden Material vermischt wird.

33. Verfahren nach Anspruch 31 oder 32,
**dadurch gekennzeichnet,**
**daß** das bewuchshemmende Mittel nach dem Aufbringen der Pulverpartikel auf die Oberfläche als Schicht aufgetragen wird.

34. Verfahren nach einem der Ansprüche 31 bis 33,
**dadurch gekennzeichnet,**
**daß** das bewuchshemmende Mittel vor dem Aufbringen der Pulverpartikel auf die Oberfläche als Schicht aufgetragen wird.

35. Verfahren nach einem der Ansprüche 1 bis 34,
**dadurch gekennzeichnet,**
**daß** die Pulverpartikel mit einem bewuchshemmenden Mittel behandelt werden.

36. Verfahren nach einem der Ansprüche 1 bis 35,
**dadurch gekennzeichnet,**
**daß** im Zuge der Hydrophobierung auf die Oberfläche ein bewuchshemmendes Mittel in Teilchenform aufgebracht wird.

37. Verfahren nach Anspruch 1,
**dadurch gekennzeichnet,**
**daß** die Pulverpartikel auf der gebrannten oder noch zu brennenden keramischen Oberfläche durch ein Haftmittel vorläufig befestigt werden,
wobei das Haftmittel ein die dauerhafte Bindung der Pulverpartikel an die keramische Oberfläche fördemdes oder bewirkendes Material ist, und diesem Material ein bewuchshemmendes Mittel zugefügt wird.

38. Keramischer Körper, als Dachziegel, Klinker, Fassadenwand oder Rauchrohr ausgebildet, mit bei Beregnung oder Berieselung mit Wasser selbstreinigender Oberfläche, auf der hydrophobe Erhebungen durch Pulverpartikel aus hitzebeständigem Material gebildet sind,
**dadurch gekennzeichnet,**
**daß** die Pulverpartikel an die keramische Oberfläche durch einen Erhitzungsvorgang keramisch gebunden sind,
wobei vorgesehen ist,
**daß** die keramische Oberfläche nach dauerhafter Befestigung der Pulverpartikel hydrophobiert ist und/oder ein bewuchshemmendes Mittel aufweist.

39. Keramischer Körper nach Anspruch 38,
**dadurch gekennzeichnet,**
**daß** die Pulverpartikel mit einem die Bindung an die Oberfläche fördernden oder bewirkenden Material behandelt oder beschichtet sind.

40. Keramischer Körper nach einem der Ansprüche 38 oder 39,
**dadurch gekennzeichnet,**
**daß** die Oberfläche mit einem die Bindung der Pulverpartikel an die Oberfläche fördemden oder bewirkenden Material beschichtet ist und die Pulverpartikel in die Schicht derart eingebettet sind, daß sie daraus hervorstehende Erhebungen bilden.

41. Keramischer Körper nach Anspruch 38 oder 40,
**dadurch gekennzeichnet,**
**daß** das die Bindung fördernde oder bewirkende Material eine Engobe, eine Glasur, ein Glasurstellmittel und/oder ein Flußmittel, z.B. Borax, ist.

42. Keramischer Körper nach Anspruch 38,
**dadurch gekennzeichnet,**
**daß** die Pulverpartikel direkt in die keramische Oberfläche derart eingebettet sind, daß sie daraus hervorstehende Erhebungen bilden.

43. Keramischer Körper nach einem der Ansprüche 38 bis 42,
**dadurch gekennzeichnet,**
**daß** die Erhebungen mit größerer Partikelgröße ihrerseits mehrere Erhebungen kleinerer Partikelgröße aufweisen.

44. Keramischer Körper nach einem der Ansprüche 38 bis 43,
**dadurch gekennzeichnet,**
**daß** die Pulverpartikel eine Partikelgröße von 1 bis 1000 µm haben und in einer Verteilungsdichte von 0 bis 500 µm auf der Oberfläche angeordnet sind.

45. Keramischer Körper nach Anspruch 44,
**dadurch gekennzeichnet,**
**daß** die Pulverpartikel unregelmäßig gestaltete Teilchen sind und unmittelbar aneinander anliegend auf der Oberfläche angeordnet sind.

46. Keramischer Körper nach Anspruch 45,
**dadurch gekennzeichnet,**
**daß** die Pulverpartikel plättchen- oder stäbchenförmig sind.

47. Keramischer Körper nach einem der Ansprüche 38 bis 46,
**dadurch gekennzeichnet,**
**daß** die Höhe der Erhebungen abwechselt derart, daß jeweils Erhebungen mit größerer Partikelgröße von Erhebungen mit kleinerer Partikelgröße umgeben sind.

48. Keramischer Körper nach einem der Ansprüche 38 bis 47,
**dadurch gekennzeichnet,**
**daß** Erhebungen mit größerer Partikelgröße ihrerseits Erhebungen mit kleinerer Partikelgröße tragen.

## Claims

1. Process for producing a self-cleaning property of the ceramic surfaces of roofing tiles, clinker bricks and external walls exposed to weathering and of ceramic surfaces in interiors of ceramic flues, when exposed to rain or spraying with water,
in which powder particles of heat-resistant material are fixed with a predetermined distribution density on a ceramic surface so as to form elevations,
**characterized in that** the powder particles are applied to the ceramic surface and initially are fixed thereon in a preliminary fashion;
**in that** the surface is heated to a temperature at which the powder particles form a bond to this ceramic surface and are thereby permanently fixed thereon;
**in that** the ceramic surface is hydrophobicized after the permanent fixing of the powder particles.

2. Process according to Claim 1, **characterized in that** the powder particles are applied to the fired ceramic surface.

3. Process according to Claim 1 or 2, **characterized in that** the powder particles are applied to the ceramic surface prior to firing of the ceramic surface.

4. Process according to Claim 3, **characterized in that** the ceramic body forming this surface is fired at a temperature at which the powder particles form a permanent bond to the ceramic surface.

5. Process according to Claim 3, **characterized in that** the powder particles are applied to the still plastic ceramic surface and are fixed thereon in a preliminary fashion by pressing into the surface.

6. Process according to Claim 5, **characterized in that** the powder particles are applied in a layer having a thickness of a multiple of the particle size to the still plastic ceramic surface.

7. Process according to Claim 6, **characterized in that** the powder particles are present dry or slightly bonded to one another in the layer.

8. Process according to any of Claims 5 to 7, **characterized in that** the powder particles are applied to the surface of the ceramic body after it has been brought to its finished shape.

9. Process according to any of Claims 5 to 7, **characterized in that** the powder particles are applied to the surface of a blank for pressure moulding of a ceramic body and the pressure moulding process serves to press the powder particles in.

10. Process according to any of Claims 5 to 9, **characterized in that** excess powder particles are removed from the still plastic or fired ceramic surface by brushing, rubbing, rinsing, blowing and/or wiping.

11. Process according to any of Claims 1 to 4, **characterized in that** the powder particles are fixed in a preliminary fashion to the fired or not yet fired ceramic surface by means of a bonding agent.

12. Process according to Claim 11, **characterized in that** the bonding agent is a material which promotes or effects permanent bonding of the powder particles to the ceramic surface.

13. Process according to Claim 11, **characterized in that** the bonding agent is a material which decomposes during the heating step to achieve the permanent bonding of the powder particles to the surface.

14. Process according to Claim 12, **characterized in that** the material which promotes or effects permanent bonding is an englobe, a glaze, a glaze set-up agent or a flux, e.g. borax.

15. Process according to Claim 12, **characterized in that** the material which promotes or effects permanent bonding is an inorganic-organic hybrid polymer or a fluorosilane.

16. Process according to Claim 1, **characterized in that** the powder particles are fixed to the fired or not yet fired ceramic surface in a preliminary fashion by means of a bonding agent, where the bonding agent is a material which promotes and effects the permanent bonding of the powder particles to the ceramic surface and is in the form of an inorganic-organic hybrid polymer or a fluorosilane.

17. Process according to any of Claims 13 to 16, **characterized in that** carboxymethylcellulose (CMC) or a polysiloxane is used as bonding agent which decomposes during the heating step.

18. Process according to any of Claims 11 to 17, **characterized in that** the powder particles are treated or coated with the bonding agent for preliminary fixing prior to or during application to the surface.

19. Process according to any of Claims 11 to 18, **characterized in that** the surface is treated or coated with the bonding agent and **in that** the powder particles are subsequently applied in such a way that they are embedded in the coating material and project from the coating.

20. Process according to any of Claims 11 to 17, **characterized in that** the powder particles are dispersed in the bonding agent and **in that** the dispersion is applied to the surface.

21. Process according to Claim 20, **characterized in that** the dispersion is applied to the surface by spraying, pouring, spin coating or electrostatic application.

22. Process according to any of Claims 11 to 17, **characterized in that** the powder particles and the bonding agent are conveyed separately to a spraying device and the powder particles are sprayed onto the surface together with the bonding agent.

23. Process according to Claims 12 and 18, **characterized in that** the thickness of the layer of the material which promotes or effects bonding on the powder particles is kept sufficiently small for the material on the ceramic surface to remain restricted to the contact region of the individual powder particles with the surface after the heating step to effect a permanent bonding.

24. Process according to any of Claims 4 to 23, **characterized in that** powder particles comprising a material whose sintering or softening temperature corresponds to the firing temperature of the ceramic surface to be fired are applied to the surface.

25. Process according to any of Claims 4 to 23, **characterized in that** the ceramic surface comprises a ceramic material which results in a surface glass phase being formed on firing and **in that** powder particles comprising a material whose sintering or softening temperature is considerably above the firing temperature of the ceramic surface to be fired are applied to the surface.

26. Process according to any of Claims 1 to 25, **characterized in that** heat-resistant ground material such as ground rock, chamotte, clay, minerals and ceramic powder such as SiC is used as powder particles.

27. Process according to any of Claims 1 to 25, **characterized in that** a ground (milled) glass or glass chamotte is used as powder particles.

28. Process according to any of Claims 1 to 27, **characterized in that** the powder particles determine the colouring of the ceramic surface.

29. Process according to any of Claims 15 to 28, **characterized in that** the inorganic-organic hybrid polymers contain organically modified silicic acid derivatives.

30. Process according to any of Claims 15 to 29, **characterized in that** the hybrid polymers contain metal oxides.

31. Process according to any of Claims 12 to 30, **characterized in that** an antifouling agent is added to the material which promotes or effects permanent bonding.

32. Process according to Claim 31, **characterized in that** the antifouling agent is mixed with the material which promotes or effects permanent bonding.

33. Process according to Claim 31 or 32, **characterized in that** the antifouling agent is applied as a layer to the surface after application of the powder particles.

34. Process according to any of Claims 31 to 33, **characterized in that** the antifouling agent is applied as a layer to the surface prior to application of the powder particles.

35. Process according to any of Claims 1 to 34, **characterized in that** the powder particles are treated with an antifouling agent.

36. Process according to any of Claims 1 to 35, **characterized in that** an antifouling agent is applied in particle form to the surface during the hydrophobicization.

37. Process according to Claim 1, **characterized in that** the powder particles are fixed on the fired or not yet fired ceramic surface in a preliminary fashion by means of a bonding agent, where the bonding agent is a material which promotes or effects the permanent bonding of the powder particles to the ceramic surface and an antifouling agent is added to this material.

38. Ceramic body in the form of a roofing tile, clinker brick, exterior wall or flue having a surface which is self-cleaning when exposed to rain or sprayed with water and on which hydrophobic elevations have been formed by powder particles comprising heat-resistant material,
**characterized in that** the powder particles have been ceramically bound to the ceramic surface by means of a heating step, and
**in that** the ceramic surface has been hydrophobicized after permanent fixing of the powder particles and/or contains an antifouling agent.

39. Ceramic body according to Claim 38, **characterized in that** the powder particles have been treated or coated with a material which promotes or effects bonding to the surface.

40. Ceramic body according to Claim 38 or 39, **characterized in that** the surface has been coated with a material which promotes or effects the bonding of the powder particles to the surface and the powder particles are embedded in the coating in such a way that they form elevations projecting therefrom.

41. Ceramic body according to Claim 38 or 40, **characterized in that** the material which promotes or effects bonding is an englobe, a glaze, a glaze set-up agent and/or a flux, e.g. borax.

42. Ceramic body according to Claim 38, **characterized in that** the powder particles are embedded directly in the ceramic surface in such a way that they form elevations projecting therefrom.

43. Ceramic body according to any of Claims 38 to 42, **characterized in that** the elevations having a relatively large particle size in turn have a plurality of elevations having a smaller particle size.

44. Ceramic body according to any of Claims 38 to 43, **characterized in that** the powder particles have a particle size of from 1 to 1 000 µm and are present on the surface in a distribution density of from 0 to 500 µm.

45. Ceramic body according to Claim 44, **characterized in that** the powder particles are irregularly shaped particles and are present on the surface in direct juxtaposition with one another.

46. Ceramic body according to Claim 45, **characterized in that** the powder particles have a platelet shape or rod shape.

47. Ceramic body according to any of Claims 38 to 46, **characterized in that** the height of the elevations alternates in such a way that elevations having a relatively large particle size are in each case surrounded by elevations having a smaller particle size.

48. Ceramic body according to any of Claims 38 to 47, **characterized in that** elevations having a relatively large particle size in turn bear elevations having a smaller particle size.

## Revendications

1. Procédé pour conférer des propriétés autonettoyantes à des surfaces céramiques, exposées aux intempéries, de tuiles de toit, de briques vernissées et de parois de façades, ainsi qu'à des surfaces céramiques de surfaces intérieures de conduits de fumées en céramique, par de l'eau de pluie ou de ruissellement, du type dans lequel, sur une surface céramique, sont fixées, en tant que reliefs, des particules pulvérulentes d'un matériau résistant à la chaleur et présentant une densité de répartition prédéterminée, procédé **caractérisé en ce que**
les particules pulvérulentes sont amenées sur la surface céramique et fixées d'abord temporairement sur celle-ci,
la surface est ensuite échauffée à une température à laquelle les particules pulvérulentes entrent en liaison avec la surface céramique et, grâce à cela, sont fixées durablement sur celles-ci et
la surface céramique, après cette fixation durable des particules pulvérulentes est rendue hydrophobe.

2. Procédé selon la revendication 1, **caractérisé en ce que** les particules pulvérulentes sont amenées sur la surface céramique cuite.

3. Procédé selon l'une des revendications 1 ou 2, **caractérisé en ce que** les particules pulvérulentes sont amenées sur la surface céramique avant la cuisson de celle-ci.

4. Procédé selon la revendication 3, **caractérisé en ce que** le corps en céramique présentant la surface est cuit à une température à laquelle les particules pulvérulentes entrent en liaison durable avec la surface céramique.

5. Procédé selon la revendication 3, **caractérisé en ce que** les particules pulvérulentes sont amenées sur la surface céramique à l'état encore souple et fixées temporairement par enfoncement dans la surface.

6. Procédé selon la revendication 5, **caractérisé en ce que** les particules pulvérulentes sont amenées sur la surface céramique à l'état encore souple sous forme d'une couche présentant une épaisseur de couche égale à plusieurs fois la taille des particules.

7. Procédé selon la revendication 6, **caractérisé en ce que** les particules pulvérulentes sont présentes dans la couche à l'état sec ou légèrement réunies les unes aux autres.

8. Procédé selon l'une quelconque des revendications 5 à 7, **caractérisé en ce que** les particules pulvérulentes sont amenées sur la surface déjà complètement conformée du corps en céramique.

9. Procédé selon l'une quelconque des revendications 5 à 7, **caractérisé en ce que** les particules pulvérulentes sont étalées sur la surface d'une ébauche en vue de la conformation par pressage d'un corps en céramique et le processus de conformation par pressage sert à l'enfoncement des particules pulvérulentes.

10. Procédé selon l'une quelconque des revendications 5 à 9, **caractérisé en ce que** les particules pulvérulentes en excès sont éliminées de la surface céramique encore souple ou cuite par brossage, frottage, rinçage, soufflage et/ou essuyage.

11. Procédé selon l'une quelconque des revendications 1 à 4, **caractérisé en ce que** les particules pulvérulentes sont fixées temporairement sur la surface céramique cuite ou encore à cuire au moyen d'un agent adhésif.

12. Procédé selon la revendication 11, **caractérisé en ce que** l'agent adhésif est une matière favorisant ou provoquant la liaison durable des particules pulvérulentes avec la surface céramique.

13. Procédé selon la revendication 11, **caractérisé en ce que** l'agent adhésif est une matière se décomposant par échauffement pour déterminer la liaison durable des particules pulvérulentes sur la surface.

14. Procédé selon la revendication 12, **caractérisé en ce que**, comme matière favorisant ou provoquant la liaison durable, on utilise une engobe, un vernis, un composant de vernis ou un fluidifiant, par exemple du borax.

15. Procédé selon la revendication 12, **caractérisé en ce que**, comme matière favorisant ou provoquant la liaison durable, on utilise un polymère hybride organique/non organique ou un fluorosilane.

16. Procédé selon la revendication 1, **caractérisé en ce que** les particules pulvérulentes sont fixées sur la surface céramique cuite ou encore à cuire par un agent adhésif, l'agent adhésif étant une matière favorisant ou provoquant la liaison durable des particules pulvérulentes sur la surface céramique et étant constituée par un polymère hybride organique/non organique ou un fluorosilane.

17. Procédé selon l'une quelconque des revendications 13 à 16, **caractérisé en ce que**, comme agent adhésif se décomposant au chauffage, on utilise de la carboxyméthylcellulose (CMC) ou un polysiloxane.

18. Procédé selon l'une quelconque des revendications 11 à 17, **caractérisé en ce que** les particules pulvérulentes sont traitées ou mises en couches avant ou au moment de l'amenée sur la surface avec l'agent adhésif en vue d'une fixation temporaire.

19. Procédé selon l'une quelconque des revendications 11 à 18, **caractérisé en ce que** la surface est traitée ou recouverte par l'agent adhésif et ensuite les particules pulvérulentes sont amenées d'une manière telle qu'elles sont noyées dans la matière de la couche en faisant saillie hors de la couche.

20. Procédé selon l'une quelconque des revendications 11 à 17, **caractérisé en ce que** les particules pulvérulentes sont dispersées dans l'agent adhésif et la dispersion est amenée sur la surface.

21. Procédé selon la revendication 20, **caractérisé en ce que** la dispersion est amenée sur la surface par étincelage, épandage, centrifugation ou par voie électrostatique.

22. Procédé selon l'une quelconque des revendications 11 à 17, **caractérisé en ce que** les particules pulvérulentes et l'agent adhésif sont alimentés séparément dans un dispositif d'étincelage et les particules pulvérulentes et l'agent adhésif sont pulvérisés ensemble sur la surface.

23. Procédé selon les revendications 12 et 18, **caractérisé en ce que** l'épaisseur de couche de la matière favorisant ou provoquant la liaison sur les particules pulvérulentes est maintenu faible au point que, après le chauffage provoquant la liaison durable, la matière sur la surface céramique demeure restreinte sur la zone de contact des particules pulvérulentes individuelles avec la surface.

24. Procédé selon l'une quelconque des revendications 4 à 23, **caractérisé en ce que** les particules pulvérulentes sont amenées sur la surface à partir d'une matière dont la température de frittage ou de ramollissement concorde avec la température de cuisson de la surface céramique à cuire.

25. Procédé selon l'une quelconque des revendications 4 à 23, **caractérisé en ce que** la surface céramique consiste en une matière céramique qui, lors de la cuisson, conduit à la création d'une phase vitreuse superficielle et les particules pulvérulentes sont amenées sur la surface à partir d'une matière dont la température de frittage ou de ramollissement est considérablement supérieure à la température de cuisson de la surface céramique à cuire.

26. Procédé selon l'une quelconque des revendications 1 à 25, **caractérisé en ce que** l'on utilise comme particules pulvérulentes une matière broyée résistant à la température telle que, à l'état broyé, de la pierraille, de la chamotte, de l'argile, des minéraux et des poudres céramiques tels que du SiC.

27. Procédé selon l'une quelconque des revendications 1 à 25, **caractérisé en ce que** l'on utilise comme particules pulvérulentes du verre broyé ou de la chamotte vitreuse.

28. Procédé selon l'une quelconque des revendications 1 à 27, **caractérisé en ce que** les particules pulvérulentes correspondent à la coloration de la surface céramique.

29. Procédé selon l'une quelconque des revendications 15 à 28, **caractérisé en ce que** les polymères hybrides organiques/non organiques contiennent des dérivés d'acide silicique modifié par voie organique.

30. Procédé selon l'une quelconque des revendications 15 à 29, **caractérisé en ce que** les polymères hybrides contiennent des oxydes métalliques.

31. Procédé selon l'une quelconque des revendications 12 à 30, **caractérisé en ce que**, à la matière favorisant ou provoquant la liaison durable est ajouté un agent freinant la croissance.

32. Procédé selon la revendication 31, **caractérisé en ce que** l'agent freinant la croissance est mélangé avec la matière favorisant ou provoquant la liaison durable.

33. Procédé selon les revendications 31 ou 32, **caractérisé en ce que** l'agent freinant la croissance est amené en couche après l'amenée des particules pulvérulentes sur les surfaces.

34. Procédé selon l'une quelconque des revendications 31 à 33, **caractérisé en ce que** l'agent freinant la croissance est amené en couche avant l'amenée des particules pulvérulentes sur la surface.

35. Procédé selon l'une quelconque des revendications 1 à 34, **caractérisé en ce que** les particules pulvérulentes sont traitées avec un agent freinant la croissance.

36. Procédé selon l'une quelconque des revendications 1 à 35, **caractérisé en ce que**, au cours du traitement d'hydrofugation, un agent freinant la croissance est amené sur la surface sous forme de petites particules.

37. Procédé selon la revendication 1, **caractérisé en ce que** les particules pulvérulentes sont fixées temporairement sur la surface céramique cuite ou encore à cuire par un agent adhésif, l'agent adhésif étant une matière favorisant ou provoquant la liaison durable des particules pulvérulentes sur la surface céramique et, à cette matière, est ajouté un agent freinant la croissance.

38. Corps céramique, sous forme de tuiles de toit, de briques vernissées, de paroi de façade ou de conduit de fumées, comportant une surface autonettoyante par l'eau de pluie ou de ruissellement, sur laquelle des saillies hydrophobes sont créées par des particules pulvérulentes de matière résistant à la chaleur, corps **caractérisé en ce que** les particules pulvérulentes sont fixées sur la surface céramique par un processus de chauffage céramique, étant prévu que la surface céramique, après fixation durable des particules pulvérulentes, est soumise à un traitement hydrophobe et/ou présente un agent freinant la croissance.

39. Corps céramique selon la revendication 38, **caractérisé en ce que** les particules pulvérulentes sont traitées ou étalées avec une matière favorisant ou provoquant la fixation sur la surface.

40. Corps céramique selon la revendication 38 ou 39, **caractérisé en ce que** la surface est recouverte avec une matière favorisant ou provoquant la liaison des particules pulvérulentes sur la surface et les particules pulvérulentes sont noyées dans la couche de revêtement d'une manière telle qu'elles créent des reliefs formant saillie hors de la couche.

41. Corps céramique selon l'une des revendications 38 ou 40, **caractérisé en ce que** la matière favorisant ou provoquant la liaison est une engobe, un vernis, un composant de vemis et/ou un fluidifiant, par exemple du borax.

42. Corps céramique selon la revendication 38, **caractérisé en ce que** les particules pulvérulentes sont directement noyées dans la surface céramique d'une manière telle qu'elles forment des reliefs en saillie hors de la surface.

43. Corps céramique selon l'une quelconque des revendications 38 à 42, **caractérisé en ce que** les reliefs à plus grandes dimensions de particules présentent pour leur part plusieurs reliefs à plus petites dimensions de particules.

44. Corps céramique selon l'une quelconque des revendications 38 à 43, **caractérisé en ce que** les particules pulvérulentes ont une taille de particules de 1 à 100 µm et sont disposées sur la surface avec une densité de répartition de 0 à 500 µm.

45. Corps céramique selon la revendication 44, **caractérisé en ce que** les particules pulvérulentes sont des petites particules irrégulières et sont disposées sur la surface directement les unes contre les autres.

46. Corps céramique selon la revendication 45, **caractérisé en ce que** les particules pulvérulentes sont en forme de petites plaques ou de petits bâtonnets.

47. Corps céramique selon l'une quelconque des revendications 38 à 46, **caractérisé en ce que** la hauteur des reliefs est alternée de manière telle que chacun des reliefs à plus grandes dimensions de particules est environné de reliefs à plus petites dimensions de particules.

48. Corps céramique selon l'une quelconque des revendications 38 à 47, **caractérisé en ce que** les reliefs à plus grandes dimensions de particules portent de leur côté des reliefs à plus petites dimensions de particules.
